Europäisches Patentamt

European Patent Office

Office européen des brevets

(19)

(11) Veröffentlichungsnummer: **0 175 805**
**B1**

(12) # EUROPÄISCHE PATENTSCHRIFT

(45) Veröffentlichungstag der Patentschrift:
03.08.88

(51) Int. Cl.⁴: **A 23 K 1/175**

(21) Anmeldenummer: **84111488.7**

(22) Anmeldetag: **26.09.84**

(54) **Verfahren zur Herstellung von Futterphosphaten.**

(43) Veröffentlichungstag der Anmeldung:
**02.04.86 Patentblatt 86/14**

(73) Patentinhaber: **VASIPARI KUTATO ES FEJLESZTÖ VALLALAT, Fehérvári ut 130, H-Budapest 1116 (HU)**

(45) Bekanntmachung des Hinweises auf die Patenterteilung:
**03.08.88 Patentblatt 88/31**

(72) Erfinder: **Péntek, István, Dr., Sasadi u. 9, Budapest 1118 (HU)**
Erfinder: **Kövecses, József, Orsolya u. 13, Budapest 1204 (HU)**
Erfinder: **Skrabák, László, Csaba u. 51, Erd 2030 (HU)**
Erfinder: **Fazekas, Arpád, Disz tér 3, Budapest 1014 (HU)**
Erfinder: **Hutás, István, Dr., Erdökerülö u. 15, Budapest 1157 (HU)**

(84) Benannte Vertragsstaaten:
**AT BE CH DE FR GB IT LI LU NL SE**

(74) Vertreter: **von Füner, Alexander, Dr. et al, Patentanwälte v. Füner, Ebbinghaus, Finck Mariahilfplatz 2 & 3, D-8000 München 90 (DE)**

(56) Entgegenhaltungen:
DD - A - 57 285
DE - A - 2 332 523

## Beschreibung

Die vorliegende Anmeldung betrifft ein Verfahren zur Herstellung von Futterphosphaten aus Rohphosphaten und/oder aus dreifachen Superphosphaten. Die Erfindung ermöglicht die Herstellung von Phosphatverbindungen, welche einen besonders geringen Fluoranteil besitzen, und welche von den Tieren sehr leicht verwertet werden können.

Der Ausgangsstoff der von der chemischen Industrie hergestellten und von der Landwirtschaft verwendeten Futterphosphaten ist das Rohphosphat oder Apatit, welches nach mehreren Methoden aufgeschlossen und entfluoriert werden kann. Nach den bekannten Verfahren werden die als Futter dienenden Phosphatverbindungen synthetisch hergestellt. Nach dem Aufschluss wird Phosphorsäure gebildet, welche entfluoriert und neutralisiert wird.

Der Aufschluss des Rohphosphates kann durch Erhitzen durchgeführt werden, wobei der Ausgangsstoff mit $Na_2CO_3$ oder $Na_2SO_4$ oder anderen alkalischen Aufschlussmitteln behandelt wird. Die gewonnenen Alkaliphosphate sind in Wasser und Zitronensäure gut lösbare basische Verbindungen, welche direkt als Futterphosphat nicht geeignet sind.

Der thermische Aufschluss des Rohphosphates ist z.B. in der HU-PS 157735 beschrieben, wobei der Aufschluss mit wässrigem Alkalihydroxid und festem Alkalicarbonat bei einer Temperatur von 1000 bis 1300 °C durchgeführt wird. Das Endprodukt besitzt einen grossen Fluoranteil und ist damit für die Lebewesen schädlich. Die im Endprodukt vorkommenden Phosphatverbindungen sind von den Tieren nicht verwertbar und können deshalb nur als Düngemittel verwendet werden.

Eine Verbesserung des thermischen Aufschlusses von Rohphosphaten ist in der HU-PS-175314 beschrieben. Hier wird nach dem thermischen Aufschluss eine Kühlung mit Pressluft und Wasser und eine Granulierung durchgeführt, welche ein Produkt mit feiner Körnung und gleichbleibender Qualität ergibt. Das Endprodukt besitzt einen grossen Anteil an Fluor und einer Siliziumverbindung der Formel $3CaO \cdot P_2O_5 \cdot 2MgO \cdot SiO_2$. Dieses Produkt ist für die Tiere ebenfalls unverwertbar und kann nur als Düngemittel verwendet werden.

Die HU-PS-170710 beschreibt ein Aufschlussverfahren des Rohphosphates zur Herstellung von Futterzusatzstoffen. Nach diesem Verfahren wird der Ausgangsstoff mit Hilfe von Zusatzstoffen, wie z.B. Natriumcarbonat, chemisch entfluoriert, und gleichzeitig durch einen einstufigen chemischen und thermischen Aufschluss in Calciumorthophosphat überführt. Das Endprodukt enthält einen Fluoranteil unter 0,3 Gew.-%, durchschnittlich 0,2 Gew.-%. Deshalb wird ein Vorprodukt mit einem $SiO_2$-Gehalt unter 2 Gew.-% hergestellt und der thermische Aufschluss wird bei einer hohen Temperatur, praktisch zwischen 1420 bis 1550 °C durchgeführt. Die Wirksamkeit der Entfluorierung des Endproduktes ist jedoch nicht immer genügend und der Fluoranteil des Endproduktes verändert sich von der Zusammensetzung des Ausgangsstoffes abhängig zwischen 0,15–0,25 Gew.-%. Zur Verbesserung der Qualität des Endproduktes sollte dieses vermindert werden.

Der phosphorsaure und thermische Aufschluss zeigt den Nachteil, dass obwohl das Endprodukt als Futtermittel verwendet werden kann, der verwertbare Anteil des $P_2O_5$-Gehaltes nicht genügend hoch und die Qualität nicht ausreichend gleichbleibend ist.

Die Aufgabe der Erfindung ist ein verbessertes Verfahren zur Herstellung von Futterphosphaten zu gewährleisten, wobei der $P_2O_5$- und Phosphatgehalt in solcher Form vorkommt, welche von den Tieren gut verwertbar ist, der Fluoranteil unter 0,35 Gew.-% bleibt und weiterhin auch das Kalium- und Calciumbedürfnis erfüllt werden kann.

Gegenstand der Anmeldung ist also ein Verfahren zur Herstellung von Futterphosphaten aus Rohphosphaten und/oder dreifachen Superphosphaten, wobei die gemahlenen phosphorhaltigen Ausgangsstoffe mit Zusatzstoffen entfluoriert, thermisch aufgeschlossen, dann mit Wasser und Pressluft gekühlt, granuliert und gemahlen werden, dadurch gekennzeichnet, dass man die phosphorhaltigen Ausgangsstoffe zusammen mit Natriumcarbonat und/oder Natriumchlorid oder deren Mischungen mit Quarzsand, bis zu einer Körnung von mindestens 100 μm mahlt, die Mischung homogenisiert, dann gegebenenfalls in bekannter Weise brikettiert, das Produkt bei einer Temperatur von 1000 bis 1450 C° unter gleichzeitigem Einleiten von Stickstoff oder Kohlendioxid thermisch behandelt, das Schmelzgut mit Wasser und Pressluft abkühlt und granuliert, das Granulat nass bis zu einer Körnung von mindestens 200 μm mahlt und gleichzeitig mit 4–35 Gew.-% Phosphorsäure oder Phosphorsäure/Schwefelsäure-Gemisch auf das Produkt berechnet aufschliesst, und anschliessend bis zu einer Feuchtigkeit von höchstens 5 Gew.-% trocknet.

Zur Durchführung des erfindungsgemässen Verfahrens werden die als Ausgangsstoff verwendeten Rohphosphate, wie z.B. marokkanisches Schwarz- oder Weissphosphat, und/oder dreifachen Superphosphate zusammen mit den entfluorierenden Zusatzstoffen gemahlen, dann wird die erhaltene Mischung homogenisiert. Als Zusatzstoff können Natriumcarbonat und/oder Natriumchlorid bzw. deren Mischung mit Quarzsand verwendet werden. Die Mahlung wird bis zu einer Körnung von mindestens 100 μm durchgeführt. Das Verhältnis des Zusatzstoffes zum phosphorhaltigen Stoff im Mahlgut liegt zwischen 0,1–0,25:1–1,1.

Das Mahlgut kann gegebenenfalls in bekannter Weise mit 0,3–1 Gew.-% Methylsilikat als Bindemittel brikettiert werden. Die Feuchtigkeit des Brikettes wird auf 2–3 Gew.-% eingestellt. Die Brikettierung dient der Verminderung der Verstaubung.

Die nächste Stufe ist ein Erschmelzen, z.B. im Lichtbogenofen, bei einer Temperatur zwischen 1000 bis 1450 °C. In die flüssige Mischung wird Stickstoff oder Kohlendioxydgas eingeblasen, um die fluorhaltigen Gase zu entfernen.

Das flüssige Schmelzgut wird in einem Granulator mit Wasser und Pressluft mit einer Geschwindigkeit von 350 °C/sec. abgekühlt und granuliert. Das Granulat, welches ein Körnungsdurchmesser von 1 bis 6 mm besitzt, wird nass gemahlen und gleichzeitig mit Phosphorsäure oder Phosphorsäure/Schwefelsäure-Gemisch aufgeschlossen. Die Menge der Phosphorsäure bzw. Phosphorsäure/Schwefelsäure-Gemisch beträgt auf die Menge des Produktes bezogen 4 bis 35 Gew.-%. Die Körnung des Produktes ist höchstens 200 µm. Die Säurezugabe senkt den pH-Wert des Granulates von 8–9 auf einen pH-Wert von 5–6.

Das Produkt wird mit höchstens 100 °C warmer Luft bis zu einer Feuchtigkeit unter 5 Gew.-% getrocknet.

Das erhaltene Endprodukt zeigt einen Fluoranteil unter 0,15 Gew.-%. Der durch Zitronensäure lösbare Anteil des $P_2O_5$-Gesamtgehaltes beträgt 94 bis 99,8 Gew.-%. Das Endprodukt ist feinkörnig und zeigt eine beständige Qualität.

Das erfindungsgemässe Verfahren ermöglicht die Herstellung von Futterphosphaten, welche von den Tieren besser verwertbar sind, und welche neben einer beständigen Qualität einen geringen Fluoranteil zeigen, da

die vereinigte Mahlung und Homogenisierung des Ausgangsstoffes und des Zusatzstoffes die Wirksamkeit der Entfluorierung deutlich erhöht;

die fluorhaltigen Gase während des thermischen Aufschlusses durch Einblasen von Stickstoff oder Kohlendioxydgas entfernt werden (die Vorteile dieser Methode zur bekannten Wasserdampfmethode bestehen in der Vermeidung der Explosionsgefahr und der Hydratisierung der Fluorverbindungen, welche eine einfache Reinigung der Fluorverbindungen enthaltenen Mischungen ermöglicht);

nach dem thermischen Aufschluss gleichzeitig mit dem Nassmahlen ein chemischer Aufschluss durchgeführt wird, welcher zur Erhöhung der Wirksamkeit des Aufschlusses und dadurch des verwertbaren $P_2O_5$-Anteiles führt (die Verbindung des chemischen Aufschlusses mit dem Nassmahlen sichert eine beständige Qualität).

Das erfindungsgemässe Verfahren wird anhand der folgenden Beispiele näher erläutert.

Beispiel 1
Herstellung von Futterphosphaten aus dreifachen Superphosphaten (TSP)

In einer Mühle wird 75 kg dreifacher Superphosphat, sowie 10 kg Natriumcarbonat und 15 kg Natriumchlorid vorgelegt. Diese Stoffe werden bis zu einer Körnung von 80 bis 100 µm gemahlen und homogenisiert.

Die homogene Mischung wird in einem Dreiphasen-Kleinspannung-Lichtbogenofen bei 1450 °C erschmolzen, wobei um die fluorhaltigen Gase zu entfernen, über den Elektroden Stickstoff eingeblasen wird (3×10 l/min). Das flüssige Schmelzgut wird in einem Granulator mit Wasser und Pressluft mit einer Geschwindigkeit von 350 °C/sec abgekühlt. Das Granulat, welches einen Körnungsdurchmesser von 1–4 mm zeigt, wird in einer Kugelmühle bis zu einer Körnung unter 200 µm gemahlen. In das Wasser, welches zum Mahlen verwendet wird, gibt man Phosphorsäure und Schwefelsäure, wobei der pH-Wert des Mahlgutes von 8–9 bis auf einen pH-Wert von 5–6 gesenkt wird.

Dazu braucht man, bezogen auf das Produkt, 5 Gew.-% $H_3PO_4$ und 1 Gew.-% $H_2SO_4$.

Das erhaltene Produkt wird mit Luft bei einer Temperatur unter 100 °C bis zu einer Feuchtigkeit von 5 Gew.-% getrocknet.

Zusammensetzung des als Ausgangsstoff verwendeten TSP:

CaO: 20,5%, $P_2O_5$: 48,5%, $SiO_2$: 3,3%, $Fe_2O_3$: 2,4%, MgO: 0,38%, $Na_2O$: 0,53%, F: 1,2%, Feuchtigkeit: 3,5%.

Zusammensetzung des Endproduktes (Gewicht: 93 kg):

CaO: 15,1%, $P_2O_5$: 39,7%, $SiO_2$: 3,2%, $Fe_2O_3$: 2,2%, MgO: 0,32%, $Na_2O$: 13,7%, F: 0,12%, Pb: 50 ppm, Cu: 10 ppm, As: 1 ppm.

Die Phosphate sind zu 99,2% in Zitronensäure löslich.

Beispiel 2
Herstellung von Futterphosphaten aus dreifachen Superphosphaten.

In einer Mühle wird 75 kg dreifaches Superphosphat, sowie 25 kg Natriumcarbonat und 2 kg Quarzsand vorgelegt. Diese Stoffe werden bis zu einer Körnung von 70 bis 100 µm gemahlen und homogenisiert.

Das erhaltene Pulver wird mit 2% Methylsilikat als Bindemittel brikettiert. Danach wird es in einem Dreiphasen-Kleinspannung-Lichtbogenofen bei 1450 °C erschmolzen, wobei zur Entfernung des Fluoranteiles über den Elektroden $CO_2$ Gas eingeblasen wird. Das Schmelzgut wird in einem Granulator mit Wasser und Pressluft mit einer Geschwindigkeit von 350 °C/sec abgekühlt. Das Granulat, welches einen Körnungsdurchmesser von 1–4 mm besitzt, wird in einer Kugelmühle bis zu einer Körnung von 100–200 µm gemahlen. In das Wasser, welches zum Mahlen verwendet wird, gibt man Phosphorsäure, wobei der pH-Wert des Mahlgutes von 8–9 bis zu einem pH-Wert von 5–6 gesenkt wird. Dazu braucht man bezogen auf das Produkt 8 Gew.-% $H_3PO_4$.

Das erhaltene Produkt wird mit Luft bei einer Temperatur unter 100 °C bis zu einer Feuchtigkeit von 4 Gew.-% getrocknet.

Zusammensetzung des als Ausgangsstoff verwendeten TSP:

CaO: 20,5%, $P_2O_5$: 48,5%, $SiO_2$: 3,3%, $Fe_2O_3$: 2,4%, MgO: 0,38%, $Na_2O$: 0,53%, F: 1,2%, Feuchtigkeit: 3,7%.

Zusammensetzung des Endproduktes (Gewicht: 92 kg): CaO: 15,3%, $P_2O_5$: 39,7%, $SiO_2$: 3,1%, $Fe_2O_3$: 2,0%, MgO: 0,29%, $Na_2O$: 14,9%, F: 0,14%, Pb: 50 ppm, Cu: 10 ppm, As: 1 ppm

Die Phosphate sind zu 98% in Zitronensäure löslich.

**Beispiel 3**
**Vergleichsbeispiel**

Man geht analog dem Beispiel 2 vor, jedoch mit dem Unterschied, dass der Ausgangsstoff mit der Phosphorsäure nur bei dem thermischen Aufschluss vereinigt wird, das Schmelzgut mit Stickstoff nicht durchgeblasen wird, und nach dem thermischen Aufschluss kein Nassmahlen durchgeführt wird.

Das erhaltene Produkt enthält 0,28% Fluor und der $P_2O_5$-Gehalt ist in Zitronensäure nur 90%ig lösbar.

**Beispiel 4**
Herstellung von Futterphosphaten aus der Mischung von marokkanischen Weissphosphaten und TSP

In einer Mühle werden 65 kg TSP und 15 kg marokkanisches Weissphosphat sowie 10 kg $Na_2CO_3$ und 10 kg NaCl vorgelegt. Diese Stoffe werden bis zu einer Körnung von 80 bis 100 μm gemahlen und homogenisiert.

Das erhaltene Pulvergemisch wird brikettiert, danach in einem Dreiphasen-Kleinspannung-Lichtbogenofen bei 1450 °C erschmolzen, wobei zur Entfernung des Fluoranteiles über den Elektroden Stickstoff eingeblasen wird (3×10 l/min). Das flüssige Schmelzgut wird in einem Granulator mit Wasser und Pressluft mit einer Geschwindigkeit von 350 °C/sec abgekühlt. Das Granulat, welches einen Körnungsdurchmesser von 1–4 mm besitzt, wird in einer Kugelmühle bis zu einer Körnung von 170–200 μm gemahlen. In das Wasser, welches zum Mahlen verwendet wird, gibt man Phosphorsäure und Schwefelsäure, wobei der pH-Wert des Mahlgutes von 8–9 auf einen pH-Wert von 5–6 gesenkt wird. Dazu braucht man bezogen auf das Produkt 5 Gew.-% Phosphorsäure und 1 Gew.-% Schwefelsäure.

Das erhaltene Produkt wird mit Luft bei einer Temperatur unter 100 °C bis zu einer Feuchtigkeit von 3 Gew.-% getrocknet.

Zusammensetzung der Ausgangsstoffe:
TSP: CaO: 20,5%, $P_2O_5$: 48,5%, $SiO_2$: 3,3%, $Fe_2O_3$: 2,4%, MgO: 0,38%, $Na_2O$: 0,53%, F: 1,2%, Feuchtigkeit: 3,7%.

Marokkanisches Weissphosphat:
CaO: 53,5%, $P_2O_5$: 32,6%, $SiO_2$: 4,0%, $Fe_2O_3$: 0,38%, MgO: 0,3%, $Na_2O$: 0,61%, F: 2,87%.

Zusammensetzung des Endproduktes (Gewicht: 91 kg):
CaO: 20,9%, $P_2O_5$: 39,6%, $SiO_2$: 3,4%, $Fe_2O_3$: 2,05%, MgO: 0,3%, $Na_2O$: 11,8%, F: 0,14%, Pb: 50 ppm, Cu: 10 ppm, As: 1 ppm

**Beispiel 5**
Herstellung von Futterphosphaten aus der Mischung von marokkanischen Schwarzphosphaten und TSP

In einer Mühle werden 65 kg TSP und 20 kg marokkanisches Schwarzphosphat sowie 5 kg $Na_2CO_3$, 10 kg NaCl und 0,1 kg Quarzsand vorgelegt. Diese Stoffe werden bis zu einer Körnung von 80–100 μm gemahlen und homogenisiert. Die homogene Mischung wird in einem Dreiphasen-Kleinspannung-Lichtbogenofen bei 1450 °C erschmolzen, wobei zur Entfernung des Fluoranteiles dreimal Stickstoff eingeblasen wird (10 l/min). Das flüssige Schmelzgut wird in einem Granulator mit Wasser und Pressluft mit einer Geschwindigkeit von 350 °C/sec abgekühlt. Das Granulat, welches einen Körnungsdurchmesser von 1–4 mm besitzt, wird in einer Kugelmühle bis zu einer Körnung von 100–200 μm gemahlen. In das Wasser, welches zum Mahlen verwendet wird, gibt man bezogen auf das Produkt 9 Gew.-% Phosphorsäure, wobei der pH-Wert des Mahlgutes sich von 8–9 auf 5–6 erniedrigt.

Das erhaltene Produkt wird mit Luft bei einer Temperatur unter 100 °C bis zu einer Feuchtigkeit von 5 Gew.-% getrocknet.

Zusammensetzung des Ausgangsstoffes:
TSP: CaO: 20,5%, $P_2O_5$: 48,5%, $SiO_2$: 3,3%, $Fe_2O_3$: 2,4%, MgO: 0,38%, $Na_2O$: 0,53%, F: 1,2%, Feuchtigkeit: 3,7%

Marokkanisches Schwarzphosphat:
CaO: 50,5%, $P_2O_5$: 31,2%, $SiO_2$: 4,0%, $Fe_2O_3$: 0,94%, MgO: 0,33%, $Na_2O$: 1,11%, $CO_2$: 5,9%, $SO_3$: 4,5%

Zusammensetzung des Endproduktes (Gewicht 90 kg): CaO: 25,9%, $P_2O_5$: 42,3%, $SiO_2$: 3,0%, $Fe_2O_3$: 1,9%, MgO: 0,28%, $Na_2O$: 9,8%, F: 0,14%, Pb: 50 ppm, Cu: 10 ppm, As: 1 ppm

Die Phosphate sind zu 98% in Zitronensäure löslich.

**Beispiel 6**
Herstellung von Futterphosphaten aus marokkanischem Schwarzphosphat

In einer Mühle wird 80 kg marokkanisches Schwarzphosphat, sowie 5 kg $Na_2CO_3$, 11 kg NaCl und 4 kg $SiO_2$ vorgelegt. Diese Stoffe werden bis zu einer Körnung von 80–100 μm gemahlen und homogenisiert.

Die homogene Mischung wird in einem Dreiphasen-Kleinspannung-Lichtbogenofen bei 1450 °C erschmolzen, wobei zur Entfernung des Fluoranteiles dreimal trockenes $CO_2$ Gas eingeblasen wird (12 l/min). Das flüssige Schmelzgut wird in einem Granulator mit Wasser und Pressluft mit einer Geschwindigkeit von 350 °C/sec abgekühlt. Das Granulat, welches einen Körnungsdurchmesser von 1–4 mm besitzt, wird in einer Kugelmühle bis zu einer Körnung von 170–200 μm gemahlen. In das Wasser, welches zum Mahlen verwendet wird, gibt man auf das Produkt bezogen 28 Gew.-% Phosphorsäure, wobei der pH-Wert des Mahlgutes sich von 8–9 auf 5–6 erniedrigt.

Das erhaltene Produkt wird mit Luft bei einer Temperatur unter 100 °C bis zu einer Feuchtigkeit von 4 Gew.-% getrocknet.

Zusammensetzung des marokkanischen Schwarzphosphates:
CaO: 50,5%, $P_2O_5$: 31,2%, $SiO_2$: 4,0%, $Fe_2O_3$: 0,94%, MgO: 0,33%, $Na_2O$: 1,11%, $CO_2$: 5,9%, $SO_3$: 4,5%

Zusammensetzung des Endproduktes (Gewicht 104 kg):

CaO: 36,7%, $P_2O_5$: 41,8%, $SiO_2$: 6,1%, $Fe_2O_3$: 0,8%, MgO: 0,25%, $Na_2O$: 7,5%, F: 0,14%, Pb: 50 ppm, Cu: 10 ppm, As: 1 ppm

Die Phosphate sind zu 99,2% in Zitronensäure löslich.

Der durch das erfindungsgemässe Verfahren hergestellte Futterzusatz gewährleistet nach den Untersuchungen eine gleichmässige Entwicklung der Tiere.

## Patentanspruch

Verfahren zur Herstellung von Futterphosphaten aus Rohphosphaten und/oder dreifachen Superphosphaten, wobei die gemahlenen phosphorhaltigen Ausgangsstoffe mit Zusatzstoffen entfluoriert, thermisch aufgeschlossen, dann mit Wasser und Pressluft gekühlt, granuliert und gemahlen werden, dadurch gekennzeichnet, dass man die phosphorhaltigen Ausgangsstoffe zusammen mit Natriumcarbonat und/oder Natriumchlorid oder deren Mischungen mit Quarzsand bis zu einer Körnung von mindestens 100 µm mahlt, die Mischung homogenisiert, dann gegebenenfalls in bekannter Weise brikettiert, das Produkt bei einer Temperatur von 1000 bis 1450 °C unter gleichzeitigem Einleiten von Stickstoff oder Kohlendioxid thermisch behandelt, das Schmelzgut mit Wasser und Pressluft abkühlt und granuliert, das Granulat nass bis zu einer Körnung von mindestens 200 µm mahlt und gleichzeitig mit 4–35 Gew.-% Phosphorsäure oder Phosphorsäure/Schwefelsäure-Gemisch auf das Produkt berechnet aufschliesst, und schliesslich bis zu einer Feuchtigkeit von höchstens 5 Gew.-% trocknet.

## Claim

Process for the production of animal feed phosphates from rock phosphates and/or triple superphosphates, whereby the ground initial substances containing phosphorous are defluoridated with additives and disintegrated by thermal means and then cooled with water and compressed air, granulated and ground, characterized in that the initial substances containing phosphorus are ground together with sodium carbonate and/or sodium chloride or their mixtures with silica sand down to a grain size of at least a 100 µm, the mixture is homogenised, then where applicable briquetted in a known manner, the product is heat treated at a temperature of 1000 to 1450 °C with a simultaneous introduction of nitrogen or carbon dioxide, the melted product is cooled and granulated with water and compressed air, the granules are ground in the wet condition to a grain size of at least 200 µm and simultaneously disintegrated with 4–35% by weight of phosphoric acid or phosphoric acid/sulphuric acid mixture calculated on the product and finally dried to a humidity of a maximum of 5% by weight.

## Revendication

Procédé de préparation de phosphates pour aliments du bétail à partir de phosphates bruts et/ou de superphosphates triples, dans lequel les produits de départ broyés contenant du phosphore sont défluorés avec des additifs, attaqués thermiquement, ensuite refroidis à l'air comprimé et à l'eau, granulés et broyés, caractérisé en ce qu'on broie les produits de départ contenant du phosphore avec du carbonate de sodium et/ou du chlorure de sodium ou leurs mélanges avec du sable de quartz, jusqu'à une granulométrie d'au moins 100 µm, on homogénéise le mélange, ensuite, le cas échéant on transforme en briquettes de manière connue, traite le produit thermiquement à une température comprise entre 1000 et 1450 °C, en introduisant simultanément de l'azote ou du dioxyde de carbone, le produit fondu est refroidi avec de l'eau et de l'air comprimé et on granule, le granulé humide est broyé jusqu'à une granulométrie d'au moins 200 µm et, simultanément on attaque avec 4–35% en poids – rapporté au produit – d'acide phosphorique ou de mélange acide phosphorique/acide sulfurique, et ensuite on sèche jusqu'à une humidité ne dépassant pas 5% en poids.